# EUROPEAN PATENT SPECIFICATION

(11) **EP 1 749 229 B1**
(45) Date of publication and mention of the grant of the patent: **29.04.2009**
(21) Application number: 04739336.8
(22) Date of filing: 24.05.2004
(51) Int. Cl.: G02B 6/44, C03B 37/03

(54) **PROCESS AND APPARATUS FOR MANUFACTURING AN OPTICAL CABLE**
PROZESS UND VORRICHTUNG ZUR HERSTELLUNG EINES OPTISCHEN KABELS
PROCEDE ET APPAREIL DE FABRICATION D'UN CABLE A FIBRE OPTIQUE

(43) Date of publication of application: 07.02.2007
(73) Proprietor: Prysmian S.p.A., 20126 Milano (IT)
(72) Inventor: RIDDETT, Kevin, Pirelli North America,Inc., Atlanta (US); GINOCCHIO, A., Pirelli Cavi E Sistemi Telecom SPA, I-20126 Milan (IT); ROBA, G. S., Pirelli Cavi e Sistemi Telecom SPA, I-20126 Milano (IT)
(74) Representative: Giannesi, Simona
(86) International application number: PCT/EP2004/005614
(87) International publication number: WO 2005/116712

(56) References cited:
- FR-A- 2 312 788
- FR-A- 2 383 138
- US-A- 4 373 943
- US-A- 6 098 429

## Description

The present invention relates to a process for manufacturing an optical cable, in particular an optical cable for telecommunications, and to a corresponding manufacturing apparatus.

An optical cable for telecommunications typically comprises an optical core incorporating a plurality of optical fibres for the transmission of optical signals and one or more reinforcing and protective layers surrounding the optical core. The optical fibers may be enclosed tightly or loosely in the optical core.

Several different cable constructions are known in the art.

A cable, generally used for interconnect applications, comprises a single optical fiber provided with a primary coating, formed by two layers of acrylate (the inner one being softer than the outer one), and with at least a protective secondary coating, for example of thermoplastic material. The secondary coating is formed by a tight buffer layer providing additional mechanical and environmental protection and easy handling. The fiber so buffered is in turn surrounded by reinforcing yarns, providing torsionally balanced tensile strength, and by an outer protective sheath, typically flame-retardant, for example of LSOH (Low Smoke Zero Halogen) compound or PVC.

Another optical cable suitable for interconnect applications comprises two single-fiber cables as previously described, with the respective outer sheaths joined together longitudinally.

Multi-fibers optical cables generally include an optical core housing a plurality of fibers, separate from each other or grouped in bundles or ribbons, and embedded in a protective material or contained in a housing such as one or more tubes. A plurality of reinforcing and protective layers typically surrounds the optical core.

A multi-fiber cable may for example comprise a plurality of fibers provided with primary and secondary coatings, tightly enclosed in a plurality of reinforcing yarns, in turn surrounded by an outer sheath. In an alternative embodiment, a multi-fiber cable may comprise a plurality of fibers (provided with primary coating) loosely housed in a buffer tube, the tube being surrounded by reinforcing yarns and an outer sheath.

Examples of multi-fiber cables are the so-called Multi Loose Tube cables, wherein strain free fibers are contained in tubes stranded around a central strength member; the so-called Slotted Core cables, wherein a number of strain free fibers are housed in a plastic slotted core; and the so-called Central Loose Tube cables, wherein up to 24 fibers are housed in a central tube surrounded by an outer strength member and an outer sheath.

As shown by these examples, an optical cable includes at least a strength member, either provided in the form of a central strength member, of an outer tubular strength member or of two lateral and opposite strength members. In alternative, or in addition, the strengthening may be provided by aramid yarns.

Optical cables are designed to provide protection for the optical fibers housed therein.

As described above, the cabled optical fibers are typically provided with primary and secondary coatings. For the purposes of the present invention, with "primary coating" it is intended the coating formed by the acrylate layer, or layers, applied directly on the bare fiber during the fiber drawing process, and with "secondary coating" it is intended the coating, loose or tight, enclosing one or more primary-coated fibers, such as the so-called "tight buffer layer" and "loose buffer tube".

Moreover, for the purposes of the present invention, with "primary protection" of an optical fiber it is intended the protection conferred to the optical fiber by the primary coating, and with "secondary protection" of an optical fiber it is intended the protection conferred to the optical fiber by any further layer or element external the primary coating, including the secondary coating previously defined, the strength member(s) and the outer sheath.

Still for the purposes of the present invention, with "optical fiber" it is intended an elongated waveguide element as drawn from a preform, typically provided with the primary coating, and with "optical cable" it is intended a structure comprising one or more optical fibers surrounded by one or more protective and reinforcing layers that render the structure suitable for installation and use for telecommunications. The process for manufacturing an optical cable typically comprises at least two main separate processes.

Optical fibers for use in telecommunication are produced by first forming a so-called "optical fibre preform" which is a substantially cylindrical element made of one or more coaxial layers of high purity glass of selected compositions, as suitable for the intended use of the optical fibre to be obtained therefrom. Such preforms can be made with various processes, for example those called in the art as OVD (Outside Vapour Deposition), VAD (Vapour Axial Deposition) or MCVD (Modified Chemical Deposition). Optical fiber preforms made of plastic are also known.

Starting from such optical fibre preform, the construction of an optical cable includes obtaining an optical fiber by submitting such preform to a drawing process. During that process, the end of the preform is brought to a suitably high temperature and softened, and an optical fiber is drawn therefrom. The chemical composition of the preform is selected to give rise to a refractive index profile in the drawn fiber, as required to guide the optical signals.

During the drawing process, the glass fiber is coated with a primary coating, typically made of two polymeric (e.g. UV cured acrylates) layers. The fiber so formed is collected on a bobbin placed at the end of the drawing apparatus. Fiber drawing process is described, for example, in US6371394.

After drawing, the fiber is usually submitted to some proof tests for mechanical and optical quality control. Such operations, made offline between the drawing process and the cabling process, usually require one or more transfer of the fiber onto different operating bobbins, suitable for internal or external factory movement. The Applicant has observed that these operations of re-spooling and testing are time and cost consuming and may cause logistic problems.

The cabling process typically includes a buffering phase by which a secondary coating is applied around one or more optical fibres; then, one or more reinforcing and/or protective layers are applied to the optical fiber(s) while the fiber(s) are unwound from the respective bobbins, so as to obtain a cable structure like the ones previously described, having the strength and protection required for installation and use. A cabling process is described for example in WO00/60393. The two processes of fiber manufacturing and cable manufacturing are therefore performed at separate times and by using separate manufacturing lines, and the overall process is therefore quite complex and time consuming.

US 4 373 943 discloses a multiple fiber formation machine comprising a drawing assembly for drawing a plurality of fibres and a linear multifibre stranding assembly.

Moreover, in the typical fiber and cable manufacturing processes, interruptions may occur even during the process itself. This problem is addressed for example in US 6,327,767. As described in that patent, during the manufacture of the cable, when a reel carrying a fiber exhausts, the end of the exhausting fiber must be connected by a splice to the end of a new fiber. This operation can require the stop of the process. The discontinuous cable manufacturing process is hampered by losses through discarded material in the process start-up and shut-down phases, and by the long start-up time of the process. The solution proposed in that patent is to accumulate the optical fiber into an active buffer and to connect the end of the exhausting fiber to the end of a new fiber by a splice, while the fiber is being fed into the cable manufacturing process during the splicing operation from the buffer. The buffer may be a three-pulleys dancer sheave, a multipass system with a fixed sheave set and a movable sheave set, a container In which the end length of the fiber is forced to fold, or a variator-type variable-diameter cone system in which the capacity of the buffer is controlled by adjusting the longitudinal position of the cones.

The Applicant has therefore tackled the problem of simplifying and reducing costs, time and waste of material of an optical fiber cable manufacturing process.

The Applicant has perceived that a cable can be produced In a faster and economic way in a single process by which a cabling phase is performed immediately after a fiber drawing phase, so as to avoid any resting, storage or transportation phase of semi-finished products. This is accomplished by integrating apparatuses for the manufacture of optical fiber(s) and apparatuses for the manufacture of an optical cable in a single manufacturing line, so that a single continuous process starting from an optical preform and ending with a finite optical cable is possible. This process, including the steps of drawing and cabling, can be performed at a substantially constant speed. The manufacturing process so obtained is therefore very simple, efficient and cost saving.

For the purposes of the present invention, with "continuous process" for manufacturing an optical fibre cable it is intended a process wherein the steps are executed in concatenation without interruptions, apart from transients and possible failure conditions, so that intermediate resting or storage phases of semifinished elements of the final cable are substantially missing. In such a process, the time occurring between the beginning of the drawing and the finished cable is substantially inversely proportional to the drawing speed of the fibre.

Still for the purposes of the present invention, with "integrated manufacturing line (or plant)" it is intended a manufacturing line (or plant) formed by a plurality of parts (components or devices) that cooperate physically or functionally with each other to perform a continuous manufacturing process. In other words, the line is a concatenated assembly of components or devices suitable to produce an optical cable starting from the optical preform(s).

An assembly including one or more optical fibers, possibly provided with secondary coating (either tight or loose) but not provided with a member or element specifically designed to support tensile stresses, is considered, for the purposes of the present invention, as a semi-finished product of the cable manufacturing process and not as an optical cable, such assembly being unsuitable to withstand the environmental and mechanical stresses to which a cable is exposed in use. Accordingly, a process whose final product is such an assembly is not here considered as a cable manufacturing process.

For example, a tight or loose buffered optical fiber is not here considered as an optical cable. A tight or loose buffered optical fiber has in fact a tensile strength which is much lower than the minimum tensile strength required for optical cables. In particular, the maximum tensile load that can be supported by a tight or loose buffered optical fiber is of the order of a few Newton (both installation and service), while the maximum tensile load that must be supported by an optical cable is much higher. For example, a single-fiber optical cable for interconnect applications can resist to tensile loads up to a few hundreds of Newton during installation and to some tens of Newton in service, while a central loose tube cable as previously described can resist to tensile loads up to many hundreds Newton in service and of a few thousands of Newton during installation.

According to a first aspect thereof, the present invention thus relates to a process for manufacturing an optical cable according to claim 1.

The process may be advantageously performed at a substantially constant speed, in particular the steps of producing the at least an optical fiber and the step of producing the optical cable may be performed at a same speed.

The process comprises, in case of rupture of the fiber in two portions, the step of splicing together the two portions. The step of splicing comprises the steps of collecting the fiber upstream the point of rupture and delivering a previously collected length of fiber downstream the point of rupture.

The steps of producing at least an optical fiber from at least an optical preform and of producing the optical cable from said at least an optical fiber are advantageously started at a same instant.

Preferably, the step of producing the optical cable comprises applying a strength member around the at least an optical fiber. Applying a strength member may comprise applying a reinforcing yarn around the at least an optical fiber.

Applying a strength member may also comprise, in addition or in alternative, applying a central strength member.

The step of producing at least an optical fiber preferably comprises applying a acrylate primary coating onto said at least an optical fiber.

The subsequent step of producing the optical cable preferably comprises buffering the at least an optical fiber.

The step of buffering may comprise applying a tight secondary coating onto said primary coating or, alternatively, realizing a loose secondary coating, in particular a loose buffer tube, housing said at least an optical fiber.

The step of producing at least an optical fiber may comprise producing in parallel a plurality of optical fibers. In this case, the step of producing the optical cable advantageously comprises assembling said plurality of optical fibers.

The process may also comprise arranging said plurality of optical fibers according to an open-helix.

The step of producing at least an optical fiber may also comprise joining said at least an optical preform with a further optical preform.

In a second aspect thereof, the present invention relates to an apparatus for manufacturing an optical cable according to claim 15.

The cabling assembly preferably comprises a strengthening and sheathing sub-assembly to apply a strength member around the at least an optical fiber.

The cabling assembly preferably comprises also a fiber buffering sub-assembly to apply a tight or loose coating onto said at least an optical fiber.

The fiber drawing assembly comprises a fiber proof tester, a first fiber accumulator positioned upstream said fiber proof tester to collect a first length of fiber in case of rupture of the fiber, and a second fiber accumulator positioned downstream said fiber proof tester to deliver a second length of fiber in case of rupture of the fiber.

The fiber drawing assembly preferably comprise a furnace, a first preform-holding device to feed a first optical preform into said furnace, a second preform-holding device to position a second optical preform above said first optical preform, and a preform-joining device for joining together said first and second optical preforms.

The apparatus for manufacturing an optical cable may also comprise a fiber pay-off service bobbin to feed an auxiliary optical fiber or a wire into an intermediate point of the integrated manufacturing line.

The invention is described in detail below with reference to the attached figures, in which a non-restrictive example of application is shown. In particular,
- Figure 1 shows a typical optical fiber;
- Figures from 2 to 5 illustrate four different optical cables, which can be manufactured according to the process of the present invention;
- Figure 6 is a schematic representation of a first embodiment of a cable manufacturing apparatus according to the present invention; and
- Figure 7 is a perspective view of a first part of the apparatus of Figure 6; and
- Figure 8 is a schematic representation of a second embodiment of a cable manufacturing apparatus according to the present invention.

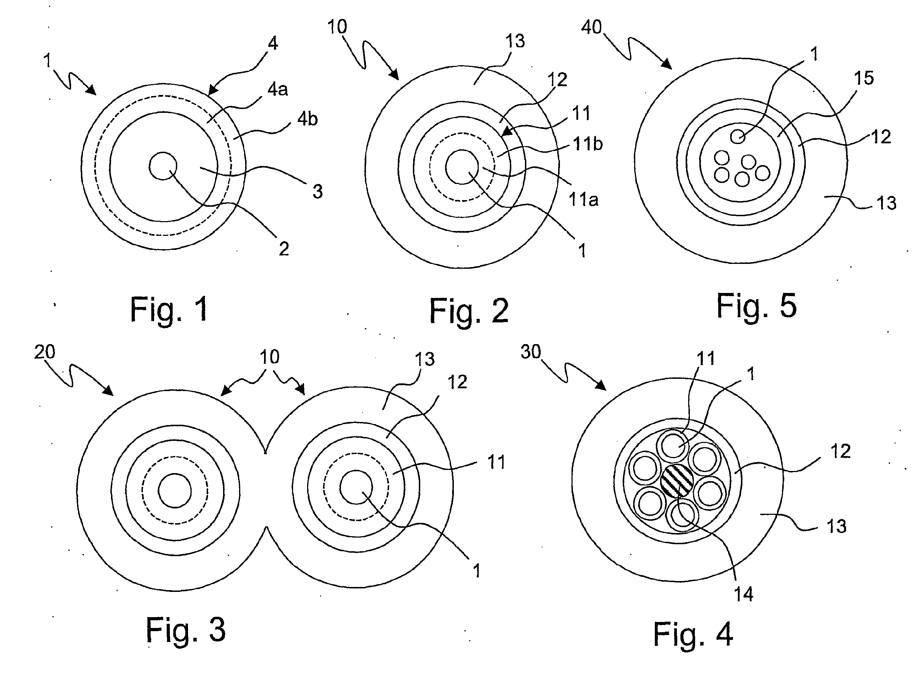

Figure 1 shows an optical fiber 1 of a known type. The optical fiber 1 can be single mode or multi mode, and comprises a core 2 (wherein the transmitted light is mainly confined) and a cladding 3, both typically made of silica. Core 2 and cladding 3 have a different refractive index, typically obtained by doping one or more regions with selected elements. For example, core 2 may be made of silica doped with germanium oxide and the cladding may be of pure silica.

Optical fiber 1 also comprises a primary coating 4 for protective purposes, typically including a first and a second polymeric coating layer 4a, 4b. The polymeric coating layers 4a, 4b may be obtained from compositions comprising oligomers and monomers, which are generally crosslinked by means of UV irradiation in the presence of a suitable photo-initiator. Typically, the two coating layers 4a, 4b are made of UV cured acrylate resin.

The two coating layers 4a, 4b described above differ, inter alia, in terms of modulus of elasticity of the crosslinked material, the first coating layer (i.e., the inner) being typically softer than the second.

Conveniently, the two layers 4a, 4b usually have a different thickness: typical ranges are from about 25 µm to about 40 µm for the first layer 4a and from about 20µm to about 40 µm for the second layer 4b.

Alternatively, the primary coating 4 may comprise a single layer of UV cured acrylate resin having an appropriate tensile modulus. US 4,682,850 provides one example of an optical fiber having a cladding coated with only a single ultraviolet-cured material.

Figure 2 shows a cross-sectional view of a single-fiber tight buffered optical cable 10 for optical telecommunications.

Cable 10 comprises, along its central axis, an optical fiber 1 (provided with the primary coating 4). Cable 10 further comprises a secondary coating 11, applied onto the primary coating 4. The secondary coating 11 comprises one or more tight buffer layers. In particular, the secondary coating 11 may comprise a single layer of, for example, UV cured acrylate or PVC, or two layers 11 a and 11 b (as in Figure 2) of, for example, polytetrafluorethylene (PTFE) and polyamide 12, or UV silicon rubber and polyamide 12. Possibly, the secondary coating may comprise additional layers. Fiber 1 coated with the secondary coating 11 will herein referred to as a "secondary coated fiber" or "tightly buffered fiber".

Cable 10 further comprises a strength member 12, consisting in a layer of aramid yarns, that reinforces the structure. Cable 10 further comprises an outer thermoplastic sheath (or jacket) 13, which provides an external mechanical protection. The external diameter of cable 10 may be, for example, between about 1.6 mm and about 3 mm.

Figure 3 is a cross-sectional view of a dual-fiber cable 20 for optical telecommunications.

Cable 20 comprises two single-fiber cables 10 as previously described having the respective external thermoplastic sheaths 13 joined together longitudinally. This can be achieved by extruding the sheaths 13 using an extruder having a "figure-of-8" shaped die.

Figure 4 illustrates, in cross-section, a six-fibers cable 30 for optical telecommunications.

Cable 30 comprises six optical fibers 1, provided with a tight secondary coating 11, arranged around a central member 14, preferably made of plastic reinforced by fiber glass. Alternatively, cable 30 may be made without the central strength member, with the tight-buffered fibers stranded in contact with each other. The fibers 1 may lay parallel to each other, or may be stranded in an open-helix (SZ stranding) or, less preferably, according to a closed-helix.

The six fibers 1, provided with the tight secondary coating 11, are preferably surrounded by a strength member including a layer of aramid yarns 12. The cable 30 finally comprises an external thermoplastic sheath 13.

Figure 5 shows, in cross-section, a multi-fiber loose-type optical cable 40, comprising a plurality of optical fibers 1 loosely housed in a secondary coating 15 defined by a buffer tube, made for example of PBT (polybutylene terephthalate), polypropylene or HDPE (high density polyethylene). The buffer tube 15 may also contain a filling compound of a known type. The buffer tube 15 is in turn surrounded by a reinforcing layer of aramid yarns 12 and an external thermoplastic sheath 13.

Cables 10, 20, 30 and 40 are only illustrative examples of cables that can be manufactured by the apparatus and method of the present invention. The technique of the present invention can be applied for the manufacture of any type of optical cable, for example the Multi Loose Tube, Central Loose Tube and Slotted core cables previously described.

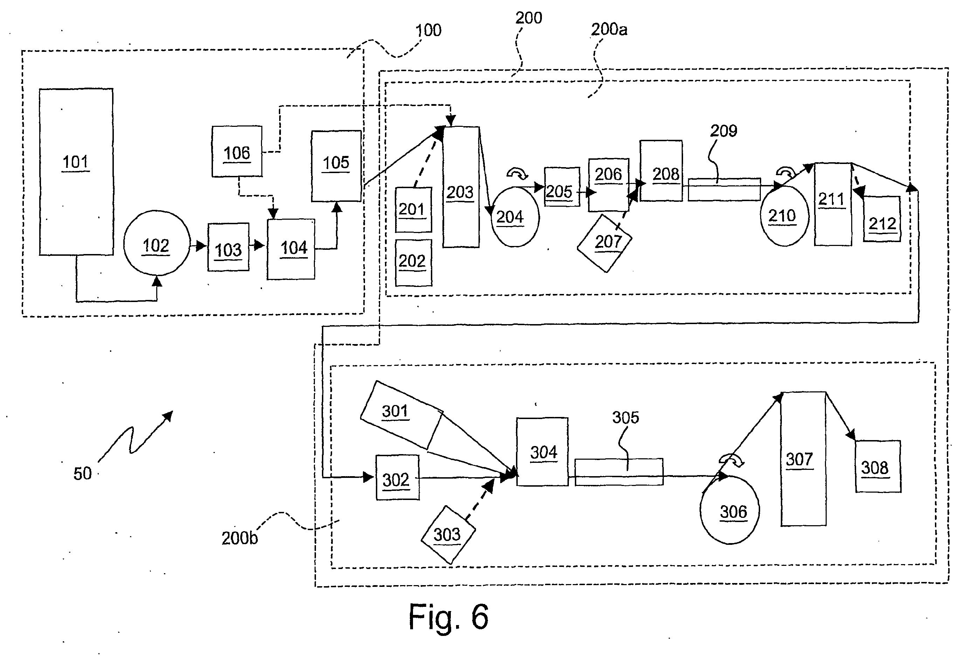

Figure 6 represents, very schematically, the basic blocks of an integrated fiber/cable manufacturing apparatus 50, suitable to produce, by a single continuous process, a tight-buffered optical cable like, for example, cables 10, 20 or 30. Apparatus 50 is apt to manufacture both the optical fiber(s) to be included in the cable, starting from a preform therefor, and the cable itself.

Apparatus 50 comprises a group of devices concatenated to each other so as to define a single and continuous manufacturing line (or plant).

As shown in Figure 6, the devices of apparatus 50 may be grouped in two main functional assemblies: a drawing assembly 100 for the production of one or more optical fibers from respective optical preforms, and a cabling assembly 200 for the production of the optical cable from the optical fiber(s). Accordingly, the continuous cable manufacturing process of the present invention, which will be later described in detail, comprises two main phases: a first phase wherein the optical fiber(s) is/are produced (optical fiber construction) and a second phase wherein reinforcing and protective layers are applied onto the optical fiber(s), such as the tight-buffer layer 11, the reinforcing yarns 12 and the external sheath 13 (optical cable construction).

In turn, the cabling assembly 200 comprises two sub-assemblies: a fiber tight-buffering sub-assembly 200a, designed to apply the tight-buffer layer 11 onto the fiber 1, and a strengthening and sheathing sub-assembly 200b, designed to apply the strength member 12 and the outer protective sheath 13 onto the buffered fiber to obtain the final cable.

In the case of the single-fiber optical cable 10, the drawing assembly 100 and the fiber tight buffering sub-assembly 200a will comprise devices for the production and buffering of a single fiber 1. In the case of the two-fibers cable 20, the above devices will be duplicated and will operate in parallel to produce and buffer two optical fibers 1. In the general case of a N-fibers tight cable, such as the six-fibers cable 30, the drawing assembly 100 preferably comprises N sets of devices operating in parallel for producing the N fibers and the fiber tight buffering sub-assembly 200a will include N sets of devices operating in parallel for buffering the N optical fibers. The buffered fibers are then assembled in the cabling assembly 200b. The N sets of devices of the drawing assembly 100 can be identical to each other, but may also be different from each other so as to allow the manufacturing of a cable having fibers of different type. The same applies to the N sets of devices of the fiber tight buffering sub-assembly 200a.

In the simple representation of Figure 6, the drawing assembly 100 and the fiber tight buffering sub-assembly 200a comprise the apparatuses for the manufacturing and coating of a single optical fiber.

In detail, the drawing assembly 100 preferably comprises: a drawing tower 101, for drawing the optical fiber 1 from a preform and applying a double acrylate layer onto the fiber; a traction device 102, for example of the type including a capstan, for pulling the fiber 1 during drawing; a tension-control device 103 (commonly known as "dancer"), to maintain a predetermined tension on the fiber 1 as it advances along the line; a fiber accumulator 104, to accumulate a certain length of fiber, if required, during the process; and a proof tester 105, for testing the tensile stress resistance of the fiber 1 during the process.

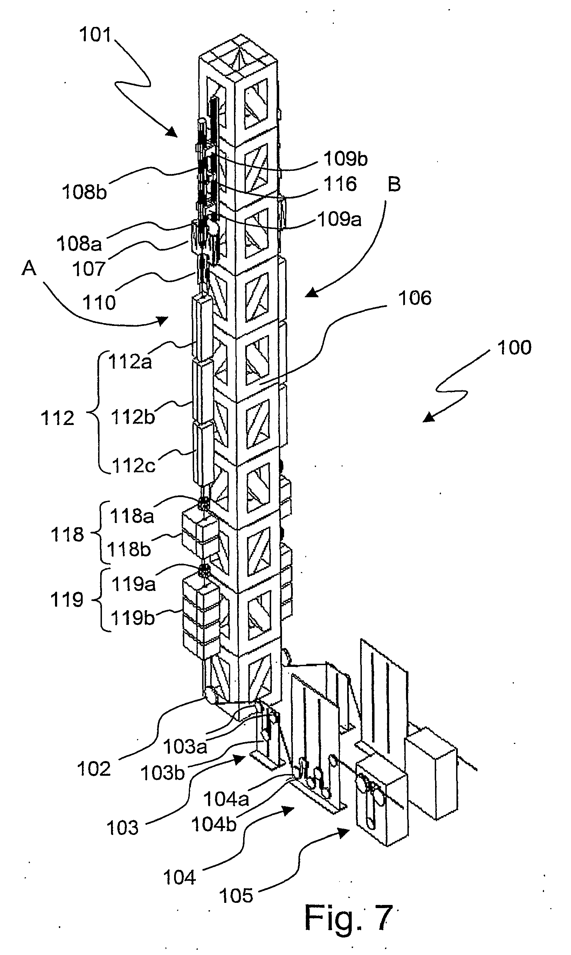

Figure 7 provides a more detailed representation (in a perspective view) of a drawing assembly 100 suitable for the contemporaneous manufacturing of two optical fibers. Drawing assembly 100 of Figure 7 has two sides A and B for the parallel production of the two fibers. Preferably, but not necessarily, the devices on sides A and B are the same. Reference numerals are therefore indicated only for side A and the description that follows refers only to side A.

Drawing tower 101 comprises a plurality of devices that are substantially aligned along a vertical drawing axis. The choice of a vertical direction in order to perform the main steps of the drawing process arises from the need to exploit the gravitational force so as to obtain, from a glass preform, molten material from which an optical fiber can be drawn.

Tower 101 comprises a vertical holding structure 106 and, on a upper portion thereof, a furnace 107 (of a known type, for example a graphite induction furnace) for performing a controlled melting of a lower portion (or "neckdown") of a first preform 108a. A first preform-feeding device 109a, positioned above the furnace 107 and fixed to structure 106, is apt to hold the first preform 108a and to feed it into the furnace 107 from the above. Preform-feeding device 109a may comprise, for example, a gripping member slidely mounted (with vertical motion) on the holding structure 106 and driven by a motorized device.

Moreover, tower 101 preferably comprises a second preform-feeding device 109b (for example, identical to the first), positioned above the first preform-feeding device 109a and apt to hold and move downward a second preform 108b. The second preform 108b will be joined to the first preform 108a before the first preform 108a is completely drawn, so as to allow a continue process. In particular, the second preform-feeding device 109b is apt to move vertically the second preform 108b so as to put the lower portion of the second preform 108b in contact with the upper portion of the first preform 108a. A movable burner 116, positioned between the first and the second preform-feeding devices 109a, 109b, is provided for joining the two preforms after they have been put in contact.

Both first and second preform-feeding device 109a, 109b preferably comprise a chuck for handling the respective preform, and three controlled motors to allow the precise movement of the chuck along the X, Y and Z axes.

Drawing tower 101 may further comprise a pre-cooling device (bottom chimney) 110 situated underneath the furnace 107, for cooling the fiber exiting it. The pre-cooling device 110 is aimed to a reduction of the fiber temperature, for example from about 2100°C (temperature of the fiber in the hot zone of the furnace) to a temperature lower than about 1600°C. This pre-cooling device, avoiding direct contact with air, allows a mild and symmetric cooling of the fibre. In this way, no irregular stress is applied to the fiber and possible bow is therefore minimized.

A cooling device 112, in this case comprising three separate cooling components 112a, 112b and 112c, is positioned downstream the pre-cooling device 110 for further lowering the temperature of the fiber, preferably to values below 50°C. The cooling device 112 is positioned at an appropriate distance from the furnace 107 in order to prevent super-cooling of the hot fiber with detrimental effects on fiber attenuation. Cooling provided by cooling device 112 avoids instabilities in the following application of the primary coating 4 and consequent problems of diameter fluctuation and coating concentricity, which would occur if the fiber temperature exceeds values of about 50°C. Preferably, the cooling device 112 is of the type having a cooling cavity suitable to be passed through by a flow of cooling gas, so as to remove heat from the fiber by forced convection; helium is a preferred gas for the forced flow, because of its better capacity of exchange heat. Alternatively from the modular device illustrated in Figure 7, cooling device 112 may of the single-component type. Moreover the cooling gas may flow from bottom to top or vice versa.

Tower 101 may also be provided with a tension gauge and a diameter gauge of a known type (not shown), preferably positioned between the pre-cooling device 110 and the cooling device 112, for measuring the tension and the diameter of the bare fiber, respectively.

Tower 101 further comprises at least a coating device to apply the primary coating to the fiber. In the illustrative example of Figure 7, tower 1 comprises a first and a second coating device 118, 119 of a known type, positioned underneath the cooling device 112 and designed to apply onto the fiber, as it passes through, the two layers 11a and 11b forming the primary coating 4. The two layers are preferably made of an acrylate resin. The first (or inner) layer is relatively soft in order to attenuate stresses transmitted to the fiber core, while the second (or outer) is relatively hard in order to protect the fiber from environmental mechanical solicitations.

Each coating device 118, 119 comprises a respective application unit 118a, 119a designed to apply onto the fiber a predefined quantity of acrylic resin, and a respective curing unit 118b, 119b for example including one or more UV-lamp ovens, for curing the resin, thus providing a stable coating. In the illustrated embodiment the first layer is cured by means of two UV lamp ovens, while the second layer by means of four UV lamp ovens. The application unit has a chamber filled by the acrylic resin, maintained at a proper pressure and temperature so to obtain a uniform layer of coating. An upper and a lower die realize the fiber inlet and outlet in the chamber; the dimension and the shape of the lower die, together with process conditions, are responsible for the thickness and the concentricity of the coating layer. The chamber may be associated with a device for flowing a gas highly soluble in the acrylic resin (typically CO₂) through the entrance of the chamber, so as to remove the air surrounding the fiber thus avoiding bubble formation inside the coating.

A contactless fiber temperature measurement device (not shown) may be positioned between the cooling device 112 and the first coating device 118, to monitor the fiber temperature before application of the primary coating.

Tower 101 may also be provided with two additional diameter gauges of a known type (not shown), the first one preferably positioned between the first curing unit 118b and the second coating application unit 119a for measuring the diameter of the first layer 11 a of the primary coating 11, the second one preferably positioned between the second curing unit 119b and the capstan 102 for measuring the diameter of the second layer 11 b of the primary coating 11.

The traction device 102 is preferably positioned at a lower end of the holding structure 106 and is apt to pull the fiber downward at a predetermined rate (the speed rate of the drawing process). In particular, the traction device 102 is the unit that rules the drawing speed of the drawing process. The traction device 102 may be of the single-pulley or double-pulley type. For example, it may include two opposite wheels, one of which having a groove where the fiber can pass and the other being coated by rubber thus ensuring the necessary friction to the fiber. In the illustrated embodiment, the traction device 102 comprises a single motor-driven capstan designed to pull the fiber in the vertical drawing direction. The traction device 102 may be provided with an angular velocity sensor (not shown).

Tower 101 may further comprise a spinning device of a known type (not shown), positioned between the last UV lamp oven of the second coating device 119 and the traction device 102, for imparting a spin to the fiber about its axis during drawing.

Tower 1 further comprises a control system (not shown), for example based on the VME/VMI technology. The software of this control system controls each phase of the process, and allows an interaction with an operator through a main panel. In particular, the control system performs several control loops for the proper running of the process. For example, the control system regulates the speed of the traction device 102 by means of a control loop with the fiber glass diameter gauge (not shown), so as to maintain the bare fiber diameter constant. Moreover, the control system regulates the preform feeding speed in order to make the speed of the traction device 102 following its target speed.

The tension-control device (dancer) 103, which is preferably arranged laterally with respect to the holding structure 106, is apt to adjust the tension of the fiber downstream the traction device 102. In particular, the tension-control device 103 is designed to keep the fiber tension substantially constant and to compensate for any speed difference between the traction device 102 and the proof tester 105.

Tension-control device 103 may comprise, for example, two fixed pulleys 103a and a movable pulley 103b, the movable pulley 103b being positioned between the two fixed pulleys 103a along the path of the fiber and being free to move vertically under the action of its own weight and the tension of the fiber. In practice, movable pulley 103b is raised if there is an undesirable increase in the tension of the fiber and is lowered if there is an undesirable decrease in the tension of the fiber, so as to keep the tension substantially constant. The movable pulley 103b may be provided with a vertical position sensor (not shown) that is designed to generate a signal indicating the vertical position of the movable pulley 103b and therefore indicating the tension of the fiber.

Alternatively, the tension-control device 103 may be an electronic dancer comprising a load cell suitable to monitor the fiber tension and a pulley carried by a motorized slide. The position of the movable pulley is controlled as a function of the signal coming from the load cell, so as to reduce or increase the length of the path of the fiber as a function of the fiber tension. A possible embodiment of such an electronic dancer is described in EP1112979.

The fiber accumulator 104 is located, in the illustrated embodiment, downstream the tension-control device 103. The accumulator 104 may include, for example, a certain number of fixed pulleys 104a and movable pulleys 104b alternate to each other. The movable pulleys 104b are movable between a rest position, wherein they are at a minimum distance from the fixed pulleys, and an operative position at a maximum distance from the fixed pulleys. The movable pulleys 104b are associated to respective motorized devices, or to a common motorized device, apt to move them from the rest position to the operative position, so as to increase the fiber path (when fiber has to be accumulated), or vice versa. For example, the motion can be vertical and the motorized device(s) is/are apt to raise the movable pulleys to a predetermined height.

The accumulator 104 thus allows collecting a predetermined length of fiber coming from the traction device 102, for example when the fiber breaks in the proof tester 105, so as to allow process continuity. In particular, when the fiber breaks, the fiber collection performed by the accumulator 104 allows an operator to intervene for making a fiber joint, reloading and restarting the proof tester 105. For example, at a speed of 10 m/s, a collection of 1000 m would allow a period of 100 s for an operator to make a joint.

In the schematic representation of Figure 7, only three fixed pulleys 104a and two movable pulleys 104b have been represented. Preferably, the number of pulleys is higher, so as to reduce the maximum travel of the movable pulleys to achieve the required accumulation length. For example, accumulator 104 may include eleven fixed pulleys 104a and ten movable pulleys 104b having an excursion of 50 m, or twenty-one fixed pulleys 104a and twenty movable pulleys 104b having an excursion of 25 m.

Accumulator 104 may be connected to a control system 106 (Figure 6) suitable to activate the motorized device(s) associated to the movable pulleys 104b in response to a rupture signal coming from the proof tester 105, so as to translate the pulleys in a direction that increases the fiber path Accumulator 104 can therefore be activated by a signal coming from the proof tester 105. The control system 106 is also suitable to switch the motion of the motorized device(s) in the opposite direction, so as to move back the pulleys to the rest position, in response to an input signal, for example from the operator making the fiber splice.

Accumulator 104 may be provided with a fiber stopping device (not shown) associated to the last pulley (in the fiber advancing direction) and able to block the fiber, thus avoiding its further advancement.

In case the movable pulleys 104b are associated to a common motorized device, they are moved together. Alternatively, if they are associated to respective motorized devices, they can be moved separately. For example, the movable pulleys 104b may be activated in succession, each one being activated once the previous one has completed its excursion, until the desired length has been collected.

The proof tester 105 is positioned downstream the accumulator 104.and is designed to test the fiber's tensile stress resistance. The proof tester is of a known type, for example of the type described in EP1112979A1. In practice, the proof tester 105 applies a predetermined tension to the fiber, so that defective fibers, having an insufficient resistance, will break and will be substituted.

With reference again to Figure 6, the fiber tight buffering sub-assembly 200a preferably comprises a pay-off service bobbin 201 suitable to feed an auxiliary fiber to the downstream devices, for setting-up and starting the second phase of the process.

The fiber tight buffering sub-assembly 200a preferably further comprises a joint service equipment 202 to provide a mechanical splice between the auxiliary fiber (used for setting up the second phase) and the fiber delivered from the drawing assembly 100 when the full line is ready for production starting. The joint service equipment 202 may also be used to provide a mechanical splice between the trailing end of the fiber already running in the second phase of the process (i.e., along the tight buffering sub-assembly 200a) and the leading end of the fiber delivered from the drawing assembly 100, in case for instance of rupture of the advancing fiber in the proof tester 105.

Preferably, the fiber tight buffering sub-assembly 200a further comprises a second accumulator device 203 for providing, at full line speed, enough time for carrying-out the above mentioned splicing operations to joint the advancing fiber, coming from the drawing assembly 100, with the trailing end of the fiber accumulated inside the device 203 itself. Advantageously, accumulator device 203 is suitable to keep collected and to deliver a length of fiber corresponding to the length that can be collected in accumulator 104 (for example, 1000 m).

Accumulator 203 may include, as accumulator 104, a certain number of fixed pulleys and movable pulleys alternate to each other. However, differently from accumulator 104, under normal operating conditions the movable pulleys are in a rest position, located at the greatest possible distance from the fixed pulleys, so that the accumulator can collect the maximum length of fiber. In case of fiber rupture, the movable pulleys are translated towards the fixed pulley, so that the collected fiber can be progressively delivered.

Accumulator 203 is advantageously connected to control system 106, so as to receive start and stop signal therefrom, just as for accumulator 104.

Preferably, a motorized capstan 204 is positioned downstream the second accumulator device 203, to provide, as a speed master of the line, a constant speed to the advancing fiber. Downstream the capstan 204, a back tension device 205 (for example a small accumulator with three pulleys) may be provided to apply a suitable back tension to the fiber.

Depending on the composition of the secondary coating 11 to be applied on the fiber, the fiber tight buffering sub-assembly 200a may further comprise a coating applicator 206 to apply onto the fiber the material forming the first layer 11 a, such as UV cured acrylate, PTFE or silicon rubber. In case of a secondary coating 11 comprising a single layer made of PVC, PBT, or LSOH material, coating applicator 206 can be omitted, since the coating will be applied at a later step.

A further pay-off service bobbin 207 may be provided for delivering an auxiliary copper wire for setting and starting up the extrusion process described below, by which the second layer 11 b is formed. The main reason for delivering an auxiliary copper wire is that the operations for setting and starting up the extrusion process are much more time-consuming than those required for setting and starting up the coating process for applying the first layer 11 a. Therefore, the extrusion process is started before the coating process and the auxiliary copper wire is used for setting the extrusion process.

An extruder 208, positioned downward the coating applicator 206, is suitable to apply onto the fiber the material forming the second layer 11b of the secondary coating 11. Extruder 208 is followed by an air-cooling and/or water-cooling trough 209, for cooling the extruded material.

The material forming the second layer 11 b can be for example polyamide 12, to be applied onto a first layer 11 a made of PTFE or UV silicon rubber. In case of a secondary coating 11 comprising a single layer made of PVC, PBT, or LSOH material, the extruder 208 is suitable to apply the considered material directly onto the optical fiber 1. Differently, in case of a secondary coating 11 comprising a single layer of UV cured acrylate (applied by coating applicator 206), extruder 208 and trough 209 can be omitted.

Preferably, the fiber tight buffering sub-assembly 200a also includes a further motorized capstan 210, for providing a constant line speed to the fiber, and a further accumulator 211, suitable to deliver a certain length of already prepared secondary-coated fiber, so as to allow the start up in cascade of the next process phase. The accumulator 211 may have, integrated therein, a back tension device of a known type (not shown), to provide a constant back tension to the fiber during the phase of applying the reinforcing and protective layers.

The fiber tight buffering sub-assembly 200a preferably comprises also a take-up for service bobbin 212, to be used during the starting up of the second phase of the process. In particular, bobbin 212 is used to collect the coated auxiliary copper wire in the start up of the second phase of the process.

In case of manufacturing of a multi-fiber cable, the fiber tight buffering sub-assembly 200a may also comprise a set of ink-application devices (of a known type and not shown), to apply different colours to the different tight buffered fibers.

The strengthening and sheathing sub-assembly 200b preferably comprises a yarns pay-off stand 301, to deliver the longitudinal reinforcing yarns 12 to be assembled into the cable. Stand 301 preferably comprises a plurality of pay-off devices of a known type (preferably, at least eight), one for each yarn cop.

The strengthening and sheathing sub-assembly 200b may further comprise a S-Z stranding device 302, to be used when the cable comprises a plurality of fibers (such as cable 30) and the fibers have to be arranged S-Z (i.e., on a open-helix). S-Z stranding device 302 may for example comprise a S-Z rotating device (such as a motorized rotating disk having evenly spaced peripheral holes) designed to receive the N fibers from the N set of devices of the fiber tight buffering sub-assembly 200a and to properly guide them.

In case the cable has to be provided with a central strength member 14, a corresponding delivery bobbin will be added to the line.

The strengthening and sheathing sub-assembly 200b further comprises an extruder 304. In the illustrated example, extruder 304 is suitable for receiving the reinforcing yarns 12 and the secondary-coated optical fibers; arranging the fibers in contact to each other in the required configuration; applying the reinforcing yarns 12 around the fiber arrangement; and applying, by extrusion, the outer sheath 13 on the reinforcing yarns 12. If a central strength member is to be added, the extruder will also receive the central strength member 14 from the corresponding delivery bobbin, and will arrange the fibers around the central strength member 14 as shown in Figure 4.

A water-cooling trough 305 is positioned downstream the extruder 304 for providing a proper cooling to the extruded outer sheath 13.

Advantageously, a pay-off service bobbin 303 may be provided upstream the extruder 304 to feed it with an auxiliary copper wire for setting and starting up the extrusion phase.

The strengthening and sheathing sub-assembly 200b further comprises a motorized capstan 306 to provide a constant line speed to the cable during this phase of the process and a cable take-up system 308. The cable take-up system 308 is preferably an automatic double bobbins take-up system 308 (for example of the type described in EP970926) to provide a cable take-up for the shipping bobbins.

The strengthening and sheathing sub-assembly 200b may advantageously comprise an accumulator device 307 positioned between the capstan 306 and the take-up system 308 for accumulating the cable when the automatic change of the bobbins takes place in the take-up system 308.

As previously described, the process for manufacturing an optical cable comprises two main steps (or phases), performed consecutively and continuously (i.e. without interruptions): a fiber-manufacturing step, or fiber drawing step, wherein one for more optical fibers, provided with a primary coating, are produced from respective optical preform(s), and a cable-manufacturing step, or cabling step, wherein the optical fibers are assembled (if more than one), and additional reinforcement and protection members (including a strength member and an outer sheath) are applied to complete the cable. In the particular embodiment described above, the cable-manufacturing step comprises a fiber tight buffering step and a strengthening and sheathing step. The described process can be carried out at a substantially constant speed, in particular at a speed of 10m/s or even higher.

The different steps forming the whole process (fiber manufacturing, fiber tight buffering, cable strengthening and sheathing) are preferably started simultaneously, by using the fiber and the wires delivered by the pay-off service bobbins 201, 207 and 303.

The fiber-manufacturing step is performed as follows.

In the drawing tower 101, the first preform-feeding device 109a, carrying the first preform 108a, is moved downward at a predetermine speed, so as to place the neckdown of the first preform 108a in the hot zone of the furnace 107, where it is melted. The first preform 108a, and every preform subsequently fed to the tower 101, can be, for example, of the type consistent with the ITU-T G. 651 or G.652 specification. These preforms may have, for example, a length between 1 m and 1.5 m, a diameter from 65 mm to 85 mm and a weight from 7 to 18 kg. Typically, the preform is a single body made of silica. However, the preform may also comprise two separate bodies forming a rod-in-tube assembly, which bodies are melted together in the furnace. The preform can be made with various processes, for example those called in the art as OVD (Outside Vapour Deposition), VAD (Vapour Axial Deposition) or MCVD (Modified Chemical Vapour Deposition). Such processes are described, for example in WO02/090276A1 (OVD), WO03/093182A1 (VAD) and WO04/018374A1 (MCVD).

When, during the process, the first preform 108a is exhausting, the second preform-feeding device 109b, carrying a second preform 108b, is moved downward so as to place the bottom of the second preform in contact with the top of the first preform. Then, the movable burner 116 is positioned in correspondence of the contact point and provides for the joining of the two preforms. The preform obtained after joint is held by the first preform-feeding device 109a, while the second preform-feeding device 109b is raised in a position where it can receive a further preform.

The fiber generated by the melting of the first preform 108a is pulled down by capstan 102 at a predetermined speed, related to the perform-feeding speed. The hot fiber is cooled down by passing through cooling device 110, to a temperature suitable for the subsequent application of the acrylates.

The tension, the diameter and the temperature of the bare fiber can be measured before the cooling device 102 by the dedicated gauges, and the temperature of the bare fiber can be measured at the exit of the cooling device by the temperature sensor. Typically, the diameter of the bare fiber is 125 µm.

The fiber is then coated with the first and second acrylate protective layers 4a, 4b into the first and second coating devices 118, 119, so as to form the primary coating 11 of the fiber. The diameter of the primary-coated fiber may be, for example, of about 185-190 µm.

The fiber may then be spinned about its axis, preferably alternately clockwise and counter-clockwise, by the spinning device (not shown).

Tension-control device 103 keeps the tension of the fiber substantially constant, so as to compensate, for example, differences in speed between the capstan 102 and the proof tester 105.

The tensile stress resistance of the fiber is then tested by the proof tester 105. In case of fiber rupture, the first accumulator 104 allows collecting the advancing fiber upstream the point of rupture, while the second accumulator 203 delivers a previously collected length of fiber downstream the point of rupture. Advantageously, the second accumulator 203 feeds to the following devices a length of fiber substantially corresponding to the length of fiber collected upstream the rupture by the first accumulator 104. The action of accumulators 104 and 105 provides a time sufficient for an operator, at full line speed, to intervene for making a splicing operation (to join the advancing fiber, coming from the proof tester 105, with the trailing end of the fiber collected in accumulator 203), reloading and restarting the proof tester 105.

In detail, accumulator 104 operates as follows. When the a rupture signal is received from proof tester 105, the fiber stopping device (not shown) associated to the last pulley is activated so as to block the fiber passing on the last pulley in that position. Simultaneously, the motor(s) associated with the movable pulleys 104b are activated so that the movable pulleys 104b starts translate. Depending whether the movable pulleys 104b are associated to a common motorized device or to respective motorized devices, they are moved together or separately. For example, in case of separate motorization, the movable pulleys 104b may be activated in succession, each pulley being activated once the previous one has completed its excursion.

The second accumulator 203 may operate exactly in the opposite way, to deliver the same length of fiber to the following devices. Fiber accumulation in accumulator 104 and fiber delivery by accumulator 203 continue until fiber splicing has been completed and the operator, by means of the control system connected to the accumulators 104 and 203, switches back the system to normal operation. The movable pulleys of accumulators 104 and 203 are therefore moved back to their rest position.

The fiber coming from the fiber manufacturing assembly 100 is then subjected to the cable manufacturing step.

As the fiber advances along the line, the motorized capstan 204 provides a constant line speed for the tight buffering step, while the back tension device 205 provides a suitable back tension to the fiber.

Coating applicator 206 and extruder 208 then apply onto the fiber the first and the second layer 11 a and 11 b forming the secondary coating 11. If the secondary coating 11 comprises a single layer, either the coating applicator 206 or extruder 208 may be omitted, depending on the composition of that layer. The extruded material is cooled in the air-cooling and/or water-cooling trough 209. The diameter of the secondary-coated fiber may be, for example, of about 700÷900 µm.

After application of the secondary coating 11, capstan 210 provides the fiber with the required line speed and the back tension device associated to accumulator 211 provides a constant back tension to the tight-buffered fiber.

In the strengthening and sheathing step, the fiber(s) so manufactured and coated is/are fed to the extruder 304 together with the reinforcing yarns 12. In case of a plurality of fibers, before entering into the extruder 304, the fibres pass through the S-Z stranding device 302 so as to receive an alternate (clockwise and counter-clockwise) motion. From the stranding device 302 to the extruder 304, the fibers are assembled in the desired configuration and surrounded by the reinforcing yarns 12. The material of the outer sheath 13 is extruded onto the reinforcing yarns 12 and, at the exit of the extruder 304, is cooled down by water-cooling trough 305.

Finally, after the motorized capstan 306 has provided a constant line speed to the formed cable, the cable is collected by the automatic double bobbins take-up system 308. When a bobbin has been completely filled, it is automatically substituted with an empty one, while accumulator 307 accumulates the cable for a time sufficient to allow bobbin substitution.

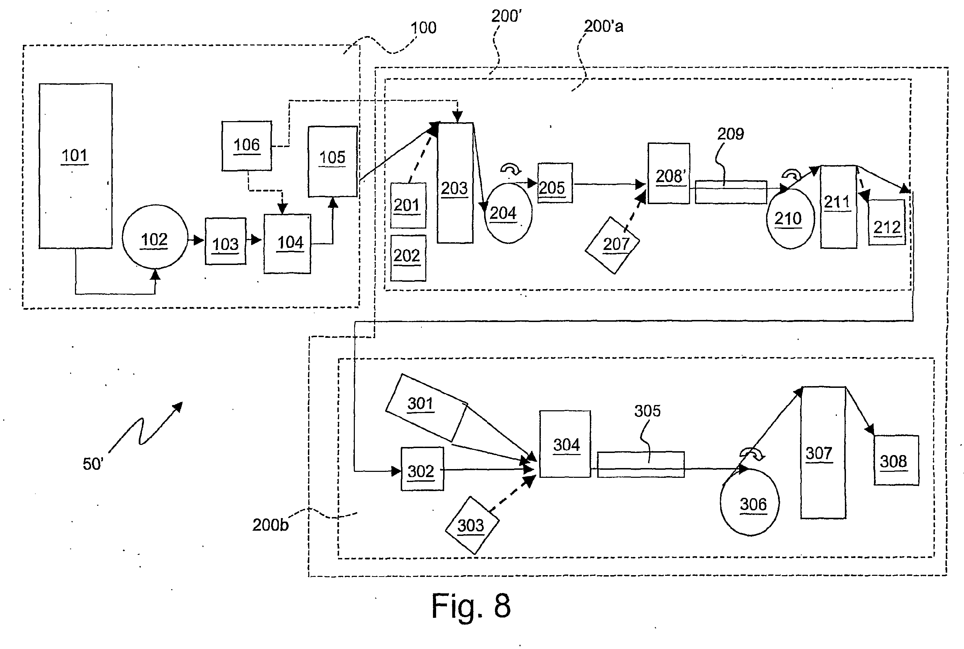

Figure 8 illustrates an alternative embodiment of the apparatus of the present invention, here indicated with 50', suitable to produce a loose-type optical cable, such as cable 40.

Apparatus 50' differs from apparatus 50 mainly in that in place of the tight buffering sub-assembly 200a there is a loose buffering sub-assembly 200'a, and the process comprises a loose buffering step instead of the tight buffering step.

Alternatively, in a possible embodiment not shown, the apparatus may comprises a fiber buffering sub-assembly including both a device for realizing a tight buffering and a device for realizing a loose buffering, so as to obtain a buffer tube loosely housing a tight buffered fiber.

Therefore, apparatus 50' comprises a drawing assembly 100 as the one previously described and a cabling assembly 200', described in detail herein below, suitable to realize the buffer tube 15 and to apply thereon the aramid yarns 12 and the outer thermoplastic sheath 13.

Fiber loose buffering sub-assembly 200'a still comprises, for each advancing fiber, a pay-off service bobbin 201, an accumulator 203, a capstan 204 and a back tension device 205, similar or identical to those of Figure 6 and suitable to perform the same start-up and fiber-repairing operations. Again, a joint service equipment 202 is provided for splicing the advancing optical fiber, in case of rupture, with the auxiliary optical fiber delivered by the pay-off service bobbin 201.

The fiber loose buffering sub-assembly 200'a may also comprise a set of ink-application devices (of a known type and not shown), to apply different colours to the different optical fibers.

Fiber loose buffering sub-assembly 200'a further comprises an extruder 208', suitable in this case to receive the optical fibers and to realize the buffer tube 15 housing them. Extruder 208' is also suitable to be fed with a filling compound to be housed in the buffer tube 15 together with the optical fibers.

The devices following extruder 208' can be the same as those following the extruder 208 in Figure 6, i.e. the rest of the manufacturing line can be as in Figure 6. In particular, the strengthening and sheathing sub-assembly 200b can be as in Figure 6.

For manufacturing a loose optical cable comprising a plurality of buffer tubes (loosely housing respective set of fibers), the apparatus 50' shall be further modified. In particular, there will be a number of extruders 208', water-cooling troughs 209, capstans 210, and accumulators 211 corresponding to the number of buffer tubes to be realized. The buffer tubes will be received by extruder 304 of Figure 8 in the same way as the optical fibers were received by extruder 304 of Figure 6.

According to the above, the process for manufacturing a loose optical cable as cable 40 comprises two main phases: a first phase wherein the optical fibers are produced (optical fiber construction) and a second phase wherein the optical fibers are loosely buffered and wherein additional reinforcing and protective layers are applied (optical cable construction).

The apparatus 50 and the apparatus 50', even if designed for the manufacturing of a cable with a predetermined number of fibers, may be rendered more flexible by the addition of a certain number of fiber delivery bobbins suitable to feed a corresponding number of optical fibers to the manufacturing line, in parallel to those realized by the fiber manufacturing assembly 100.

## Claims

1. Process for manufacturing an optical cable, comprising the steps of
a) producing at least an optical fiber from at least an optical preform,
b) producing the optical cable from said at least an optical fiber, **characterized in that** said process include a step c) for coping with a rupture of the fiber in two portion, wherein step c) comprises splicing together the two fiber portions and wherein
step c) of splicing comprises the steps of c1) collecting the fiber upstream the point of rupture and c2) delivering a previously collected length of fiber downstream the point of rupture so as to continue the optical fiber production of step a) and the optical cable production of step b) during the fiber splicing of step c).

2. Process according to claim 1, **characterized in that** in c1) the fiber is collected for a length equal to the length of the previously collected fiber.

3. Process according to claim 1, **characterized in that**, after the step c) of splicing together the two fiber portions has been completed, it further comprises the step of delivering the fiber collected in c1).

4. Process according to claim 1, **characterized in that** the steps of producing at least an optical fiber from at least an optical preform and of producing the optical cable from said at least an optical fiber are started at a same instant.

5. Process according to claim 1, **characterized in that** the step of producing the optical cable comprises applying a. strength member around the at least an optical fiber.

6. Process according to claim 5, **characterized in that** applying a strength member comprises applying a reinforcing yarn around the at least an optical fiber.

7. Process according to claim 1, **characterized in that** the step of producing at least an optical fiber comprises applying an acrylate primary coating onto said at least an optical fiber.

8. Process according to claim 7, **characterized in that** the step of producing the optical cable comprises buffering said at least an optical fiber.

9. Process according to claim 8, **characterized in that** the step of buffering comprises applying a tight secondary coating onto said primary coating.

10. Process according to claim 8, **characterized in that** the step of buffering comprises realizing a loose secondary coating housing said at least an optical fiber.

11. Process according to claim 1, **characterized in that** the step of producing at least an optical fiber comprises producing in parallel a plurality of optical fibers.

12. Process according to claim 11, **characterized in that** the step of producing the optical cable comprises assembling said plurality of optical fibers.

13. Process according to claim 11, **characterized in that** the step of producing the optical cable comprises arranging said plurality of optical fibers according to an open-helix.

14. Process according to claim 1, **characterized in that** the step of producing at least an optical fiber comprises joining said at least an optical preform with a further optical preform.

15. Apparatus for manufacturing an optical cable, including an integrated manufacturing line (50; 50') comprising a drawing assembly (100) for producing at least an optical fiber from at least an optical preform and a cabling assembly (200; 200') for producing the optical cable from said at least an optical fiber, **characterized in that**
- the drawing assembly (100) comprises a fiber proof tester (105), and **in that**
- the apparatus comprises a first fiber accumulator (104) positioned upstream said fiber proof tester (105) and a second fiber accumulator (203) positioned downstream said fiber proof tester (105),
wherein, to cope with rupture of the fiber in two fiber portions, the first fiber accumulator (104) is adapted to collect a first length of fiber upstream said fiber proof tester (105) and the second fiber accumulator (203) is adapted to deliver a second length of fiber downstream said fiber proof tester (105), so as to continue the optical fiber production tin the drawing assembly (100) and the optical cable production in the cabling assembly (200; 200'.) during a splicing operation of the two fiber portions.

16. Apparatus according to claim 15, wherein the cabling assembly (200; 200') comprises a strengthening and sheathing sub-assembly (200b) for applying a strength member around said at least an optical fiber.

17. Apparatus according to claim 15, wherein the cabling assembly (200; 200') comprises a fiber buffering sub-assembly (200a, 200'a) to apply a tight or loose coating onto said at least an optical fiber.

18. Apparatus according to claim 15, **characterized in that** the first length of fiber collected by the first fiber accumulator (104) and the second length of fiber delivered by the second fiber accumulator (203) are equal.

19. Apparatus according to claim 15, **characterized in that** the drawing assembly (100) comprises a furnace (107), a first preform-holding device (109a) to feed a first optical preform into said furnace (107), a second preform-holding device (109b) to position a second optical preform above said first optical preform, and a preform-joining device (116) for joining together said first and second optical preforms.

20. Apparatus according to any of claims 15 to 19, **characterized in that** the cabling assembly (200; 200') comprises a first pay-off service bobbin (201) suitable to feed an auxiliary fiber for setting-up and starting a fiber coating process, so that the fiber coating process at then cabling assembly (200; 200') and the optical fiber production at the drawing assembly (100) can be started at the same time.

21. Apparatus according to claim 20, **characterized in that** the cabling assembly (200; 200') comprises a second, further pay-off service bobbins (207) suitable to feed an auxiliary copper wire for setting-up and starting an extrusion process, so that at the cabling assembly (200; 200') the extrusion process can be started before the fiber coating process.

## Patentansprüche

1. Verfahren zur Herstellung eines optischen Kabels, umfassend die Schritte:
a) Herstellen wenigstens einer optischen Faser aus einer optischen Vorform,
b) Herstellen des optischen Kabels aus der wenigstens einen optischen Faser, **dadurch gekennzeichnet, dass** das Verfahren einen Schritt
c) zum Behandeln eines Bruchs der Faser in zwei Abschnitte umfasst, wobei der Schritt c) ein Spleißen der zwei Faserabschnitte umfasst, und der Schritt c) des Spleißens die Schritte umfasst,
c1) Einsammeln der Faser stromaufwärts des Bruchpunktes und
c2) Zuführen einer vorherigen eingesammelten Länge von Faser stromabwärts des Bruchpunktes, um die Herstellung der optischen Faser nach Schritt a) und die Herstellung des optischen Kabels nach Schritt b) während des Spleißens der Faser nach Schritt c) fortzuführen.

2. Verfahren nach Anspruch 1, **dadurch gekennzeichnet, dass** in c1) die Faser um eine Länge gleich der Länge der vorher eingesammelten Faser eingesammelt wird.

3. Verfahren nach Anspruch 1, **dadurch gekennzeichnet, dass**, nachdem der Schritt c) des Spleißens der zwei Faserabschnitt miteinander beendet wurde, dieser ferner den Schritt des Zuführens der Faser umfasst, die in c1) eingesammelt wird.

4. Verfahren nach Anspruch 1, **dadurch gekennzeichnet, dass** die Schritte der Herstellung wenigstens einer optischen Faser aus wenigstens einer optischen Vorform und der Herstellung des optischen Kabels aus der wenigstens einen optischen Faser im selben Moment erfolgen.

5. Verfahren nach Anspruch 1, **dadurch gekennzeichnet, dass** der Schritt der Herstellung des optischen Kabels das Anbringen eines Verstärkungselements um wenigstens eine optische Faser umfasst.

6. Verfahren nach Anspruch 5, **dadurch gekennzeichnet, dass** das Anbringen eines Verstärkungselements das Anbringen eines Verstärkungsgarns um wenigstens eine optische Faser umfasst.

7. Verfahren nach Anspruch 1, **dadurch gekennzeichnet, dass** der Schritt der Herstellung wenigstens einer optischen Faser das Aufbringen einer primären Acrylatbeschichtung auf die wenigstens eine optische Faser umfasst.

8. Verfahren nach Anspruch 7, **dadurch gekennzeichnet, dass** der Schritt der Herstellung der optischen Faser ein Puffern der wenigstens einen optischen Faser umfasst.

9. Verfahren nach Anspruch 8, **dadurch gekennzeichnet, dass** der Schritt des Pufferns das Aufbringen einer engen zweiten Beschichtung auf die primäre Beschichtung umfasst.

10. Verfahren nach Anspruch 8, **dadurch gekennzeichnet, dass** der Schritt des Pufferns eine Realisierung einer losen sekundären Beschichtung umfasst, welche die wenigstens eine optische Faser aufnimmt.

11. Verfahren nach Anspruch 1, **dadurch gekennzeichnet, dass** der Schritt der Herstellung wenigstens einer optischen Faser die parallele Herstellung einer Mehrzahl von optischen Fasern umfasst.

12. Verfahren nach Anspruch 11, **dadurch gekennzeichnet, dass** der Schritt der Herstellung des optischen Kabels ein Zusammenfügen der Mehrzahl der optischen Fasern umfasst.

13. Verfahren nach Anspruch 11, **dadurch gekennzeichnet, dass** der Schritt der Herstellung des optischen Kabels eine Anordnung der Mehrzahl der optischen Fasern gemäß einer offenen Helix umfasst.

14. Verfahren nach Anspruch 1, **dadurch gekennzeichnet, dass** der Schritt der Herstellung wenigstens einer optischen Faser ein Verbinden der wenigstens einen optischen Vorform mit einer weiteren optischen Vorform umfasst.

15. Vorrichtung zur Herstellung eines optischen Kabels, die eine integrierte Herstellungslinie (50; 50') umfasst, die einen Zugaufbau (100) zur Herstellung wenigstens einer optischen Faser aus wenigstens einer optischen Vorform und einen Kabelherstellungsaufbau (200; 200') zur Herstellung des optischen Kabels aus der wenigstens einen optischen Faser umfasst, **dadurch gekennzeichnet dass**.
- der Zugaufbau (100) einen Fasernachweistester (105) umfasst, und **dadurch**, dass
- die Vorrichtung einen ersten Faserakkumulator (104), der stromaufwärts bezüglich des Fasernachweistesters (105) positioniert ist, und einen zweiten Faserakkumulator (203) umfasst, der stromabwärts bezüglich des Fasernachweistesters (105) positioniert ist,
bei der, um einen Bruch der Faser in zwei Faserabschnitte zu behandeln, der erste Faserakkumulator (104) angepasst ist, um eine erste Länge einer Faser stromabwärts bezüglich des Fasernachweistesters (105) einzusammeln und der zweite Faserakkumulator (203) angepasst ist, um eine zweite Länge der Faser stromabwärts bezüglich des Fasernachweistesters (105) zuzuführen, um die Glasfaserherstellung in dem Zugaufbau (100) und die Herstellung des optischen Kabels in dem Kabelherstellungsaufbau (200; 200') während eines Spleißbetriebs der zwei Faserabschnitte fortzuführen.

16. Vorrichtung nach Anspruch 15, bei welcher der Kabelherstellungsaufbau (200; 200') einen Unteraufbau des Verstärkens und der Umhüllung (200b) zum Anbringen eines Verstärkungselements um die wenigstens eine optische Faser umfasst.

17. Vorrichtung nach Anspruch 15, bei welcher der Kabelherstellungsaufbau (200; 200') einen Unteraufbau des Pufferns (200a, 200'a) umfasst, um eine enge oder lose Beschichtung auf wenigstens eine optische Faser aufzubringen.

18. Vorrichtung nach Anspruch 15, **dadurch gekennzeichnet, dass** die erste Länge der Faser, die durch den ersten Faserakkumulator (104) eingesammelt wird, und die zweite Länge der Faser, die durch den zweiten Faserakkumulator (203) zugeführt wird, gleich sind.

19. Vorrichtung nach Anspruch 15, **dadurch gekennzeichnet, dass** der Zugaufbau (100) einen Ofen (107), eine erste Vorformhalteeinrichtung (109a), um eine erste optische Vorform in den Ofen (107) einzubringen, eine zweite Vorformhalteeinrichtung (109b), um eine zweite optische Vorform oberhalb der ersten optischen Vorform zu positionieren, und eine Vorformverbindungseinrichtung (116) zum miteinander Verbinden der ersten und zweiten optischen Vorform umfasst.

20. Vorrichtung nach einem der Ansprüche 15 bis 19, **dadurch gekennzeichnet, dass** der Kabelaufbau (200; 200') eine erste Abwicklungsgebrauchsspule (201) umfasst, die geeignet ist, eine Hilfsfaser zum Einrichten und Starten eines Faserbeschichtungsverfahrens zuzuführen, so dass das Faserbeschichtungsverfahren an dem Kabelherstellungsaufbau (200; 200') und die Herstellung der optischen Faser am Zugaufbau (100) gleichzeitig gestartet werden können.

21. Vorrichtung nach Anspruch 20, **dadurch gekennzeichnet, dass** der Kabelherstellungsaufbau (200; 200') eine zweite, weitere Abwicklungsgebrauchsspule (207) umfasst, die geeignet ist, um einen Hilfskupferdraht zum Einrichten und Starten eines Extrudierverfahrens zuzuführen, so dass am Kabelherstellungsaufbau (200, 200') das Extrudierverfahren vor dem Faserbeschichtungsverfahren gestartet werden kann.

## Revendications

1. Procédé de fabrication d'un câble optique, comprenant les étapes consistant à :
a) produire au moins une fibre optique à partir d'au moins une préforme optique,
b) produire le câble optique à partir de ladite fibre optique, **caractérisé en ce que** ledit procédé comprend une étape c) pour s'occuper d'une rupture de la fibre en deux parties, dans lequel l'étape c) comprend le fait d'épisser ensemble les deux parties de fibre et dans lequel l'étape c) d'épissurage comprend les étapes consistant à c1) collecter la fibre en amont du point de rupture et c2) distribuer une longueur de fibre précédemment collectée en aval du point de rupture afin de continuer la production de fibre optique de l'étape a) et la production de câble optique de l'étape b) pendant l'épissurage de fibre de l'étape c).

2. Procédé selon la revendication 1, **caractérisé en ce que** en c1), on collecte la fibre sur une longueur égale à la longueur de la fibre précédemment collectée.

3. Procédé selon la revendication 1, **caractérisé en ce que**, après que l'étape c) d'épissurage des deux parties de fibre a été achevée, il comprend en outre l'étape consistant à distribuer la fibre collectée en c1).

4. Procédé selon la revendication 1, **caractérisé en ce que** l'on démarre en même temps les étapes de production d'au moins une fibre optique à partir d'au moins une préforme optique et de production du câble optique à partir de ladite fibre optique.

5. Procédé selon la revendication 1, **caractérisé en ce que** l'étape de production du câble optique comprend l'application d'un élément de renforcement autour de ladite au moins une fibre optique.

6. Procédé selon la revendication 5, **caractérisé en ce que** l'application d'un élément de renforcement comprend l'application d'un fil de renforcement autour de ladite au moins une fibre optique.

7. Procédé selon la revendication 1, **caractérisé en ce que** l'étape de production d'au moins une fibre optique comprend l'application d'un revêtement primaire d'acrylate sur ladite au moins une fibre optique.

8. Procédé selon la revendication 7, **caractérisé en ce que** l'étape de production du câble optique comprend le fait de tamponner ladite au moins une fibre optique.

9. Procédé selon la revendication 8, **caractérisé en ce que** l'étape de tamponnage comprend l'application d'un revêtement secondaire serré sur ledit revêtement primaire.

10. Procédé selon la revendication 8, **caractérisé en ce que** l'étape de tamponnage comprend la réalisation d'un revêtement secondaire lâche dans lequel est logée ladite au moins une fibre optique.

11. Procédé selon la revendication 1, **caractérisé en ce que** l'étape de production d'au moins une fibre optique comprend la production en parallèle d'une pluralité de fibres optiques.

12. Procédé selon la revendication 11, **caractérisé en ce que** l'étape de production du câble optique comprend l'assemblage de ladite pluralité de fibres optiques.

13. Procédé selon la revendication 11, **caractérisé en ce que** l'étape de production du câble optique comprend la disposition de ladite pluralité de fibres optiques en hélice ouverte.

14. Procédé selon la revendication 1, **caractérisé en ce que** l'étape de production d'au moins une fibre optique comprend la jonction de ladite au moins une préforme optique avec une préforme optique supplémentaire.

15. Dispositif pour la fabrication d'un câble optique, comprenant une ligne de fabrication intégrée (50 ; 50') comprenant un ensemble d'étirage (100) pour produire au moins une fibre optique à partir d'au moins une préforme optique et un ensemble de câblage (200 ; 200') pour produire le câble optique à partir de ladite au moins une fibre optique, **caractérisé en ce que** :
- l'ensemble d'étirage (100) comprend un dispositif d'essai de rupture de fibre par traction (105), et **en ce que** :
- le dispositif comprend un premier accumulateur de fibre (104) positionné en amont dudit dispositif d'essai de rupture de fibre par traction (105) et un deuxième accumulateur de fibre (203) positionné en aval dudit dispositif d'essai de rupture de fibre par traction (105),
dans lequel, pour s'occuper de la rupture de la fibre en deux parties de fibre, le premier accumulateur de fibre (104) est adapté pour collecter une première longueur de fibre en amont dudit dispositif d'essai de rupture de fibre par traction (105) et le deuxième accumulateur de fibre (203) est adapté pour délivrer une deuxième longueur de fibre en aval dudit dispositif d'essai de rupture de fibre par traction (105), afin de continuer la production de fibre optique dans l'ensemble d'étirage (100) et la production de câble optique dans l'ensemble de câblage (200 ; 200') pendant une opération d'épissurage des deux parties de fibre.

16. Dispositif selon la revendication 15, dans lequel l'ensemble de câblage (200 ; 200') comprend un sous-ensemble de renforcement et de gainage (200b) pour appliquer un élément de renforcement autour de ladite au moins une fibre optique.

17. Dispositif selon la revendication 15, dans lequel l'ensemble de câblage (200 ; 200') comprend un sous-ensemble de tamponnage de fibre (200a, 200'a) pour appliquer un revêtement serré ou lâche sur ladite au moins une fibre optique.

18. Dispositif selon la revendication 15, **caractérisé en ce que** la première longueur de fibre collectée par le premier accumulateur de fibre (104) et la deuxième longueur de fibre délivrée par le deuxième accumulateur de fibre (203) sont égales.

19. Dispositif selon la revendication 15, **caractérisé en ce que** l'ensemble d'étirage (100) comprend un four (107), un premier appareil de maintien de préforme (109a) pour introduire une première préforme optique dans ledit four (107), un deuxième appareil de maintien de préforme (109b) pour positionner une deuxième préforme optique au-dessus de ladite première préforme optique, et un appareil de jonction de préformes (116) pour relier entre elles lesdites première et deuxième préformes optiques.

20. Dispositif selon l'une quelconque des revendications 15 à 19, **caractérisé en ce que** l'ensemble de câblage (200 ; 200') comprend une première bobine de service d'enlevage (201) adaptée pour fournir une fibre auxiliaire pour établir et démarrer un processus de revêtement de fibre, de sorte que le processus de revêtement de fibre au niveau de l'ensemble de câblage (200 ; 200') et la production de fibre optique au niveau de l'ensemble d'étirage (100) peuvent être démarrés en même temps.

21. Dispositif selon la revendication 20, **caractérisé en ce que** l'ensemble de câblage (200 ; 200') comprend une deuxième bobine de service d'enlevage supplémentaire (207) adaptée pour fournir un fil de cuivre auxiliaire pour établir et démarrer un processus d'extrusion, de sorte que, au niveau de l'ensemble de câblage (200 ; 200'), le processus d'extrusion peut être démarré avant le processus de revêtement de fibre.
